# EUROPEAN PATENT APPLICATION

(11) **EP 4 700 889 A1**
(43) Date of publication of application: **25.02.2026**
(21) Application number: 24791709.9
(22) Date of filing: 04.02.2024
(51) Int. Cl.: H01M 10/0565, H01M 10/058

(54) **LOW-TEMPERATURE POLYMERIZED GEL ELECTROLYTE AND BATTERY COMPRISING SAME**

(30) Priority: 18.04.2023 CN 202310409953
(71) Applicant: REPT BATTERO Energy Co., Ltd., Wenzhou, Zhejiang 325000 (CN); Shanghai Ruipu Energy Co., Ltd., Shanghai 201206 (CN)
(72) Inventor: CAO, Hui, Wenzhou, Zhejiang 325000 (CN); HOU, Min, Shanghai 201206 (CN); ZHAO, Xiang, Shanghai 201206 (CN); CUI, Yi, Shanghai 201206 (CN); LIU, Chan, Shanghai 201206 (CN)
(74) Representative: Nederlandsch Octrooibureau
(86) International application number: PCT/CN2024/075713
(87) International publication number: WO 2024/217121

(57) **Abstract**

Provided in the present invention are a low-temperature polymerized gel electrolyte and a battery comprising same. The raw material for the preparation of the gel electrolyte is a gel precursor solution, and the gel precursor solution comprises polymerization monomers, an electrolyte solution additive, a thermal initiator, a lithium salt and a solvent. By limiting the polymerization monomers to comprise a monofunctional acylate monomer, a polyfunctional acrylate monomer and a functional monomer and further limiting the functional monomer to contain a cross-linking group and a monovinyl group, the gel precursor solution can be polymerized at a relatively low temperature to obtain a gel electrolyte having a soft and sticky texture, such that the decomposition of the electrolyte solution additive added in the gel electrolyte can be avoided, and the electrical performance and safety performance of a battery containing the gel electrolyte are effectively improved.

## Description

### Technical field

The present invention belongs to the field of battery technology, and specifically involves a low-temperature polymerized gel electrolyte and a battery comprising same.

### Background technology

After decades of commercial application, batteries have transformed the world in various ways. However, the development of power batteries and grid energy storage urgently requires further improvement in battery energy density. To achieve this goal, the most critical approach is to increase the volumetric and gravimetric capacity of cathode and anode materials. For example, it is effective to develop high-nickel ternary materials for the cathode and silicon/graphite composite materials (with silicon content>10%) for the anode.

However, this also brings more severe safety issues, such as an increased possibility of thermal runaway leading to fires and explosions. Thermal runaway is associated with multiple factors, among which a key mechanism involves the decomposition of charged electrode materials and subsequent gas generation during the initial stages of thermal runaway. For example, high-nickel ternary cathode materials release oxygen undergoing phase transitions, while silicon/graphite anode materials and SEI films decompose to produce reducing gases like ethylene and acetylene. When these gases penetrate the separator and interact with materials on the opposite electrode, they further intensify thermal runaway reactions, potentially leading to explosions. Additionally, to improve the interface stability of the battery's cathode and anode materials, electrolyte formulations have been continuously updated, including the addition of high-performance film-forming additives such as fluoroethylene carbonate (FEC) and ethylene sulfate (DTD). However, the stability of these additives is poor, and they decompose and deactivate when heated.

To limit leakage and enhance safety performance, preparing semi-solid-state batteries is a viable approach. The in-situ formation of gel electrolytes aligns with the actual production conditions of factories, requiring no changes to the production line design. It only involves adding polymerization monomers and a small amount of initiator to the conventional electrolyte, which can then form a gel electrolyte inside the cell upon heating. CN113096969A discloses a polymer gel electrolyte/electrode and its preparation method, as well as a supercapacitor and its preparation method. The present invention provides a method for preparing a polymer gel electrolyte/electrode, which includes the following steps: mixing polymerization monomers, conductive media, water, and initiators to obtain a precursor solution; immersing the electrode in the precursor solution and performing in-situ polymerization to produce the polymer gel electrolyte/electrode. By infiltrating the precursor solution into the electrode material layer for in-situ polymerization reactions, the present invention ensures that the surface of the electrode material comes into full contact with the gel electrolyte, establishing an effective charge transfer interface and improving the energy storage performance of the polymer gel electrolyte/electrode. However, the in-situ polymerization temperature of the gel electrolyte provided by the present invention is relatively high, and the electrolyte solution additives are temperature sensitive, decomposing and losing activity when heated. This poses significant challenges for the design of new safe electrolyte systems.

And the current in-situ gel technology generally requires a temperature of over 60°C for thermal initiation, which consumes unreacted monomers and achieves a high degree of polymerization. However, this condition can lead to the decomposition of electrolyte solution additives, causing the electrolyte to discolor (turn yellow) and further degrading the batter's electrochemical performance. Additionally, the current in-situ gel electrolytes mainly address the issue of leakage but do not significantly improve the problem of thermal runaway caused by gas diffusion.

Therefore, it is expected to develop a gel electrolyte with a lower in-situ polymerization temperature and an effective gas shuttling isolation.

### Summary of the present invention

In response to the shortcomings of existing technologies, the purpose of the present invention is to provide a low-temperature polymerized gel electrolyte and a battery comprising same. The gel electrolyte achieves in-situ polymerization at relatively low temperatures (not exceeding 40 ° C) by selecting three polymers in combination. This effectively prevents the decomposition of electrolyte solution additives, enhancing the electrical performance of batteries containing it. Moreover, when early thermal runaway occurs, the gel electrolyte can further thermally cure and become hard, maintaining the integrity of the separator shape and preventing gas diffusion, thereby limiting the progression of thermal runaway reactions and significantly improving battery safety.

To achieve this purpose, the present invention adopts the following technical solutions:
In a first aspect, the present invention provides a low-temperature polymerized gel electrolyte, wherein the preparation raw material of the low-temperature polymerized gel electrolyte is a gel precursor solution, which includes a combination of polymerization monomer, electrolyte solution additive, thermal initiator, lithium salt and solvent;

The polymerization monomers include monofunctional acrylate monomers, polyfunctional acrylate monomers and functional monomers, wherein the functional monomers contain cross-linking groups and monovinyl groups.

The gel electrolyte provided by the present invention is obtained through in-situ polymerization of a gel precursor solution. The gel precursor solution contains polymerization monomers, which are defined to include combinations of monofunctional acrylate monomers, polyfunctional acrylate monomers, and functional monomers, with further definition that the functional monomers contain cross-linking groups and monovinyl groups. On one hand, by selecting these three types of polymerization monomers in combination, in-situ polymerization can occur at relatively low temperatures (not exceeding 40°C), effectively preventing the decomposition of electrolyte solution additives and enhancing the electrical performance of the battery. On the other hand, the monofunctional acrylate monomers and polyfunctional acrylate monomers can form a three-dimensional and thermally stable polymer framework during in-situ polymerization. When combined with functional monomers, this framework can be adjusted to regulate the texture and flowability of the resulting gel electrolyte, ensuring that the gel electrolyte maintains a soft and sticky consistency, allowing for full immersion of the cell without leakage. Additionally, when early thermal runaway occurs (over 100 ° C), the gel electrolyte can further thermally cure to become hard, maintaining the integrity of the separator shape and preventing gas diffusion, thereby limiting the further progression of thermal runaway reactions and significantly enhancing the safety performance of the battery.

Preferably, the gel precursor solution comprises the following components in parts by weight:

| | |
|---|---|
| Polymerization monomers | 1 to 10 parts by weight |
| Electrolyte solution additives | 0 to 10 parts by weight and not equal to 0 |
| Thermal initiator | 0.02 to 0.05 parts by weight |
| Lithium salts | 8 to 20 parts by weight |
| Solvent | 50 to 80 parts by weight. |

In the gel precursor solution, the mass ratio content of the polymerization monomer is 1 to 10 parts by weight, for example, 2 parts by weight, 3 parts by weight, 4 parts by weight, 5 parts by weight, 6 parts by weight, 7 parts by weight, 8 parts by weight or 9 parts by weight, preferably 1 to 5 parts by weight.

The mass ratio content of the electrolyte solution additive in the gel precursor solution is 0 to 10 parts by weight and is not equal to 0, such as 2 parts by weight, 3 parts by weight, 4 parts by weight, 5 parts by weight, 6 parts by weight, 7 parts by weight, 8 parts by weight or 9 parts by weight.

The mass ratio of the thermal initiator in the gel precursor solution is 0.02 to 0.05 parts by weight, for example, 0.025 parts by weight, 0.03 parts by weight, 0.035 parts by weight, 0.04 parts by weight or 0.045 parts by weight.

The mass ratio of lithium salt in the gel precursor solution is 8 to 20 parts by weight, for example, 10 parts by weight, 12 parts by weight, 14 parts by weight, 16 parts by weight or 18 parts by weight.

Preferably, the mass ratio of the solvent in the gel precursor solution is 50 to 80 parts by weight, for example, 53 parts by weight, 56 parts by weight, 59 parts by weight, 62 parts by weight, 65 parts by weight, 68 parts by weight, 71 parts by weight, 74 parts by weight or 77 parts by weight.

In some preferred embodiments, the gel precursor solution comprises a total of 100 parts by weight of the gel precursor solution, which includes the following components parts by weight:

| | |
|---|---|
| Polymerization monomers | 1 to 10 parts by weight |
| Electrolyte solution additives | 0 to 10 parts by weight and not equal to 0 |
| Thermal initiator | 0.02 to 0.05 parts by weight |
| Lithium salts | 8 to 20 parts by weight |
| Solvent | 50 to 80 parts by weight. |

In some preferred embodiments, the mass ratio of polymerization monomer in the gel precursor solution is 1% to 10%, for example, 2%, 3%, 4%, 5%, 6%, 7%, 8% or 9%, preferably 1 to 5%.

In some preferred embodiments, the mass ratio of electrolyte solution additive in the gel precursor solution is 0 to 10% and not equal to 0, such as 2%, 3%, 4%, 5%, 6%, 7%, 8% or 9%.

In some preferred embodiments, the mass ratio of the thermal initiator in the gel precursor solution is 0.02% - 0.05%, for example 0.025%, 0.03%, 0.035%, 0.04% or 0.045%.

In some preferred embodiments, the mass ratio of lithium salt in the gel precursor solution is 8% to 20%, for example 10%, 12%, 14%, 16% or 18%.

In some preferred embodiments, the mass ratio of solvent in the gel precursor solution is 50% to 80%, for example, 53%, 56%, 59%, 62%, 65%, 68%, 71%, 74% or 77%.

Preferably, the mass ratio of monofunctional acrylate monomer, polyfunctional acrylate monomer and functional monomer is 1:(0.5 - 1.5):(0.1 - 0.5).

Among them, the mass ratio of monofunctional acrylate monomer to polyfunctional acrylate monomer is 1:0.6, 1:0.7, 1:0.8, 1:0.9, 1:1, 1:1.1, 1:1.2, 1:1.3 or 1:1.4, etc.

The mass ratio of the monofunctional acrylate monomer to the functional monomer is 1:0.15,1:0.2, 1:0.25,1:0.3, 1:0.35,1:0.4 or 1:0.45, etc.

As the preferred technical solution of the present invention, the mass ratio of monofunctional acrylate monomer, polyfunctional acrylate monomer, and functional monomer is set to 1:(0.5 - 1.5):(0.1 - 0.5), which can optimize the overall performance of the gel electrolyte. If the amount of monofunctional acrylate monomer is relatively low, it will result in a harder gel electrolyte with lower ionic conductivity. If the amount of polyfunctional acrylate monomer is relatively low, it will increase the total amount of polymerization monomers required to form the gel electrolyte and reduce its stability. If the amount of functional monomer is relatively low, it will fail to form a more rigid gel electrolyte during early thermal runaway, thus failing to effectively enhance the thermal stability of the battery.

In the present invention, monofunctional acrylate monomers contain only one acrylate or methacrylate group. Preferably, the monofunctional acrylate monomers include any one or a combination of at least two of the following: n-butyl acrylate, isobutyl acrylate, propyl acrylate, polyethylene glycol methacrylate, polyethylene glycol monoethyl ether methacrylate, 2-methoxyethyl acrylate, ethyl acrylate, hexyl acrylate, lauryl acrylate, 2-ethylhexyl acrylate, lauric acid methyl ester, or octyl acrylate.

In the present invention, the polyfunctional acrylate monomer contains two or more groups selected from acrylate groups and methacrylate groups. Preferably, the polyfunctional acrylate monomer includes any one or a combination of at least two of polyethylene glycol dimethacrylate, polyethylene glycol diacrylate, pentaerythritol tetraacrylate, ethoxylated trimethylolpropane triacrylate, ethylene glycol dimethacrylate, tetraethylene glycol dimethacrylate, or triethylene glycol diacrylate.

In the present invention, monofunctional acrylate monomers and polyfunctional acrylate monomers do not contain the cross-linking groups described herein.

In some embodiments, the cross-linking group is a functional group that does not polymerize at lower temperatures (e.g., 20 - 40°C) and begins to polymerize at higher temperatures (e.g., >40°C).

Preferably, the cross-linking group includes a cyclic ether group and/or a silane group.

In the present invention, the functional monomer containing a monovinyl group means that the number of reactive carbon-carbon double bonds contained in the functional monomer is one.

Preferably, the functional monomer comprises any one or a combination of at least two of glycidyl methacrylate, trimethoxysilane vinyl, triethoxysilane vinyl, triisopropoxysilane vinyl or γ-methacryloxypropyltrimethoxysilane.

In some embodiments, the monofunctional acrylate monomer is n-butyl acrylate, the polyfunctional acrylate monomer is polyethylene glycol dimethyl acrylate, and the functional monomer is glycidyl methacrylate.

Preferably, the electrolyte solution additive comprises fluorinated ethylene carbonate (FEC) and/or vinylene sulfate (DTD). In some embodiments, the electrolyte solution additive comprises FEC and DTD, and the mass ratio of FEC to DTD can be 1:1 to 3:1, for example 1.5:1, 2:1, 2.5:1.

Preferably, the thermal initiator comprises a peroxide and/or azo compound.

Preferably, the peroxide comprises benzoyl peroxide (BPO).

Preferably, the azo compound comprises any one of azobisisobutyronitrile (AIBN), dimethyl azobisisobutyrate (AIBME) or azobisheptanitrile (ABVN) or a combination of at least two thereof.

Preferably, the lithium salt comprises lithium hexafluorophosphate.

Preferably, the solvent comprises ethylene carbonate and/or diethyl carbonate. In some embodiments, the solvent comprises ethylene carbonate and diethyl carbonate, and the volume ratio of ethylene carbonate to diethyl carbonate can be 1:2 to 2:1, for example 1:1.5, 1:1, 1.5:1.

In a second aspect, the present invention provides a method for preparing the gel electrolyte as described in the first aspect, which comprises: polymerizing the polymerization monomer, electrolyte solution additive, thermal initiator, lithium salt and solvent at 20 - 40°C for 6 - 24 h under nitrogen atmosphere to obtain the gel electrolyte.

Preferably, the polymerization temperature is 20 - 40°C, such as 22°C, 24°C, 26°C, 28° C, 30°C, 32°C, 34°C, 36°C or 38°C, and more preferably 25 - 30°C.

Preferably, the polymerization time is 6 - 24 h, such as 8 h, 10 h, 12 h, 14 h, 16 h, 18 h, 20 h or 22 h, and more preferably 12 - 15 h. As a preferred technical solution of the present invention, the preparation method of the gel electrolyte includes the following steps:
(A) The polymerization monomer, electrolyte solution additive, thermal initiator, lithium salt and solvent uniformly was mixed to obtain the gel electrolyte precursor solution (i.e., gel precursor solution);
(B) The gel electrolyte precursor solution obtained from step (A) was transferred into a sealed glass container. After three cycles of liquid nitrogen freezing, vacuum pumping, and returning to room temperature, the nitrogen gas was intet in to the gel electrolyte precursor solution to ensure that the system is under a nitrogen atmosphere. Finally, place the glass container at an ambient temperature of 20 - 40°C and let it stand for 6 - 24 h to obtain the gel electrolyte.

In step (A), it is preferable to mix the polymerization monomer, the thermal initiator and other components of the gel precursor solution in an open environment with a temperature of 20 - 25°C and humidity of 0 - 5% to avoid the in-situ polymerization of the gel precursor solution in advance.

It should be noted that in step (B) of the preparation method of the gel electrolyte provided by the present invention, air is discharged during the process of filling nitrogen gas, and the polymerization monomer begins to polymerize after the air is discharged, because the presence of oxygen in the air will inhibit the occurrence of the polymerization reaction.

In a third aspect, the present invention provides a battery comprising a cathode, an anode, a separator and a low-temperature polymerized gel electrolyte as described in the first aspect.

Preferably, the battery is any one of cylindrical battery, pouch battery or square battery.

Preferably, the battery includes a wound battery or a laminated battery.

Preferably, the active material of the cathode includes a ternary material of nickel, cobalt and manganese.

Preferably, the nickel-cobalt-manganese ternary material is LiNi_{1-x-y}CoₓMn_{y}O₂, wherein 0.6<=1-x-y<1;

Among them, 1-x-y can be equal to 0.6, 0.7, 0.8 or 0.9.

0<x<0.4, for example, x can be equal to 0.05, 0.1, 0.2, 0.3, etc.

0<y<0.4, for example, y can be equal to 0.05, 0.1, 0.2, 0.3, etc.

Preferably, the nickel-cobalt-manganese ternary material is any one of LiNi_{0.6}Co_{0.2}Mn_{0.2}O₂, LiNi_{0.8}Co_{0.1}Mn_{0.1}O₂, LiNi_{0.83}Co_{0.08}Mn_{0.09}O₂ or LiNi_{0.9}Co_{0.05}Mn_{0.05}O₂ or a combination of at least two.

Preferably, the active material of the anode includes silicon/graphite composite material.

Preferably, the mass ratio of silicon in the silicon/graphite composite material is 5 - 30%, for example, 7%, 9%, 11%, 13%, 15%, 17%, 19%, 21%, 23%, 25%, 27% or 29%.

As the preferred technical solution of the present invention, the gel electrolyte provided is more suitable for batteries with high nickel-content nickel-cobalt-manganese ternary cathode materials and silicon/graphite composite anode materials with high silicon content. Although the specific capacity of the cathode and anode active materials has increased, the interface stability of the electrodes also decreases, so that it is necessary to use essential electrolyte solution additives such as fluorinated ethylene carbonate (FEC) and/or diethyl sulfate (DTD). However, these electrolyte solution additives have poor thermal stability and tend to decompose when heated. The gel electrolyte provided by the present invention can be polymerized into a gel at temperatures no higher than 40 ° C without causing the decomposition or deactivation of the electrolyte solution additives.

Preferably, the separator comprises a polyethylene separator or a polypropylene separator.

In a fourth aspect, the present invention provides a method for preparing the battery as described in the third aspect, which comprises the following steps:
(1) The cathode, anode and separator are assembled to obtain the battery cell;
(2) The preparation raw materials of the gel electrolyte provided in the first aspect are injected into the battery cell obtained in step (1), and the cell is left open, sealed after nitrogen purging, and then in situ polymerized to obtain the battery.

Preferably, the assembly method described in step (1) includes winding or stacking.

Preferably, step (1) is carried out in an environment (such as air environment) at a temperature of 20 - 25°C (e.g., 21°C, 22°C, 23°C or 24°C, etc.) and humidity of 0 - 5% (e.g., 1%, 2%, 3% or 4%, etc.).

As a preferred technical solution of the present invention, to prevent the gel precursor solution from undergoing in-situ polymerization before being injected into the cell, it is necessary to control the humidity of its environment to 0 - 5% and the temperature to 20 - 25° C, and in the air, monomers will be inhibited from undergoing in-situ polymerization. Preferably, the time for open-air static placement is 20 - 26 h, for example, 21 h, 22 h, 23 h, 24 h, or 25 h.

As a preferred technical solution of the present invention, in order to make the cell fully immersed, the open time before nitrogen purging and sealing should be 20 to 26 hours.

Preferably, the open is placed in an environment with a temperature of 20 - 25°C (e.g., 21°C, 22°C, 23°C or 24°C, etc.) and a humidity of 0 - 5% (e.g., 1%, 2%, 3% or 4%, etc.).

Preferably, the time of nitrogen purging is 0 - 10 min and not equal to 0, such as 1 min, 2 min, 3 min, 4 min, 5 min, 6 min, 7 min, 8 min or 9 min.

Preferably, the in-situ polymerization temperature is 20 - 40°C, such as 22°C, 24°C, 26° C, 28°C, 30°C, 32°C, 34°C, 36°C or 38°C, and further preferably 25 - 30°C.

Preferably, the in-situ polymerization time is 6 - 24 h, such as 8 h, 10 h, 12 h, 14 h, 16 h, 18 h, 20 h or 22 h, and more preferably 12 - 15 h.

Preferably, the in-situ polymerization is followed by a step of formation, exhaust and capacity sorting.

As the preferred technical solution of the present invention, the preparation method of the battery cell includes the following steps:
(1) The polymerization monomer, electrolyte solution additive, thermal initiator, lithium salt and solvent are mixed at the temperature of 20 - 25°C and humidity of 0 -5% to obtain the gel precursor solution;
   The cathode, anode and separator are assembled to obtain the battery cell;
(2) The gel precursor solution obtained from step (1) was injected into the battery cell obtained from step (1), then left to stand for 20 - 26 h at a temperature of 20 - 25°C and humidity of 0 - 5%, followed by nitrogen purging and sealing. In-situ polymerization was carried out at 20 - 40°C for 6 - 24 h, followed by formation, degassing, and capacity grading to obtain the final battery.

Compared with the existing technology, the present invention has the following beneficial effects:
The preparation material for the low-temperature polymerized gel electrolyte provided by the present invention is a gel precursor solution, which includes a combination of polymerization monomers, electrolyte solution additives, thermal initiators, lithium salts, and solvents; by specifying that the polymerization monomers include monofunctional acrylate monomers, polyfunctional acrylate monomers, and functional monomers, which the functional monomers contain cross-linking groups and monovinyl groups, the in-situ polymerization can occur at relatively low temperatures (not exceeding 40°C) using these three types of polymerization monomers. This effectively prevents the decomposition of electrolyte solution additives, enhances the electrical performance of the battery, and allows the gel electrolyte to further thermally cure and become hard when early thermal runaway occurs, thus maintaining the integrity of the separator shape and preventing gas diffusion, thereby limiting the further occurrence of thermal runaway reactions and significantly improving the safety performance of the battery.

### Detailed description

The technical solution of the present invention is further described below by specific methods. Those skilled in the art should understand that the embodiments are only to help understand the present invention and should not be regarded as specific limitations of the present invention.

### Example 1

A low-temperature polymerized gel electrolyte, wherein the preparation material of the gel electrolyte is a gel precursor solution, which includes 5% polymerization monomer, 7% electrolyte solution additive, 0.05% thermal initiator, 12.95% lithium salt and 75% solvent by mass ratio;
Among them, the polymerization monomer is composed of n-butyl acrylate, polyethylene glycol dimethacrylate, and glycidyl methacrylate in a mass ratio of 1:0.8:0.2; the electrolyte solution additive is composed of vinylene carbonate and vinylene sulfate in a mass ratio of 5:2; the thermal initiator is azobisisobutyronitrile; the lithium salt is lithium hexafluorophosphate; the solvent is ethylene carbonate and diethyl carbonate in a volume ratio of 1:1;
The preparation method of the gel electrolyte provided in this embodiment includes the following steps:
   (1) The lithium salt was dissolved in a solvent, followed by the addition of electrolyte solution additives to obtain the electrolyte solution.
   (2) At 25°C and 2% relative humidity in an open environment, the monomer was mixed with the electrolyte obtained in step (1), and a thermal initiator was added to the mixture, resulting in a clear and transparent gel precursor solution.
   (3) The gel precursor solution from step (2) was transferred into a sealable glass container. After three cycles of liquid nitrogen freezing, vacuum pumping, and returning to room temperature, nitrogen was injected to ensure that the system is under a nitrogen atmosphere. Subsequently, the glass container was maintained at 25°C for 12 hours to allow polymerization, yielding the target gel electrolyte.

### Example 2

A low-temperature polymerized gel electrolyte, which is different from Example 1 only in that the polymerization temperature in step (3) is 40°C, and other substances, amounts and conditions are the same as those in Example 1.

### Example 3

A low-temperature polymerized gel electrolyte, which is different from Example 1 only in that the polymerization temperature in step (3) is 20°C, and other substances, amounts and conditions are the same as those in Example 1.

### Example 4

A low-temperature polymerized gel electrolyte, which is different from Example 1 only in that the polymerization temperature in step (3) is 60°C, and other substances, amounts and conditions are the same as those in Example 1.

### Example 5

A low-temperature polymerized gel electrolyte, which is different from Example 1 only in that the polymerization monomer in the gel precursor solution is composed of n-butyl acrylate, polyethylene glycol dimethyl methacrylate and glycidyl methacrylate in a mass ratio of 1:0.4:0.2, and other substances, amounts and parameters are the same as those in Example 1.

### Example 6

A low-temperature polymerized gel electrolyte, which is different from Example 1 only in that the polymerization monomer in the gel precursor solution composed of n-butyl acrylate, polyethylene glycol dimethyl methacrylate and glycidyl methacrylate in a mass ratio of 1:1.8:0.2, and other substances, amounts and parameters are the same as those in Example 1.

### Example 7

A low-temperature polymerized gel electrolyte, which is different from Example 1 only in that the polymerization monomer in the gel precursor solution is composed of n-butyl acrylate, polyethylene glycol dimethyl methacrylate and glycidyl methacrylate in a mass ratio of 1:0.8:0.05, and other substances, amounts and parameters are the same as those in Example 1.

### Example 8

A low-temperature polymerized gel electrolyte, which is different from Example 1 only in that the polymerization monomer in the gel precursor solution is composed of n-butyl acrylate, polyethylene glycol dimethyl methacrylate and glycidyl methacrylate in a mass ratio of 1:0.8:0.8, and other substances, amounts and parameters are the same as those in Example 1.

### Application Example 1

A battery with a capacity of 3.2 Ah, which includes a cathode, an anode, a gel electrolyte and a separator;
Among them, the active material of the cathode is 811 NCM ternary material (LiNi_{0.8}Co_{0.1}Mn_{0.1}O₂), the conductive agent is carbon black, and the binder is polyvinylidene fluoride (PVDF). The preparation method for the cathode includes: 98 wt% of the active material, 1 wt% of the conductive agent, and 1 wt% of the binder in N-methylpyrrolidone (NMP) to form a cathode slurry. Then, the cathode slurry is coated on aluminum foil as the current collector and dried. Next, the dried cathode is rolled, cut into strips, punched into sheets, and finally dried under vacuum at high temperature to obtain the ready-to-use cathode;
The active material of the anode is a silicon/graphite composite (containing 12 wt% silicon), the conductive agent is carbon black, and the binder is sodium carboxymethyl cellulose (CMC). The preparation method of the anode includes: 98 wt% active material, 0.8 wt% conductive agent, and 1.2 wt% binder is dispersed in deionized water to form an anode slurry, then the anode slurry is coated onto the current collector and dried. Next, the dried anode is rolled, cut into strips, punched into sheets, and finally dried under vacuum at high temperature to obtain the ready-to-use anode;
The separator is ordinary commercial PE separator;
The preparation material of the gel electrolyte is a gel precursor solution, which includes 5% polymerization monomer by mass, 7% electrolyte solution additive, 0.05% thermal initiator, 12.95% lithium salt, and 75% solvent; the polymerization monomer is composed of propyl acrylate, polyethylene glycol dimethacrylate, and glycidyl methacrylate in a mass ratio of 1:0.8:0.2; the electrolyte solution additive composed of vinylene carbonate and ethylene sulfate in a mass ratio of 5:2; the thermal initiator is azobisisobutyronitrile; the lithium salt is lithium hexafluorophosphate; the solvent is ethylene carbonate and diethyl carbonate in a volume ratio of 1:1;
The preparation method of the battery provided in this application example includes the following steps:
   (1) Dissolve lithium salt in the solvent, add electrolyte solution additives to obtain the electrolyte;
   (2) Under the condition of temperature 25°C and humidity 2%, the polymerization monomer is mixed with the electrolyte obtained in step (1), and the thermal initiator is added for mixing to obtain a clear and transparent gel precursor solution;
   (3) The cathode, anode and separator are assembled into a battery cell in the winding mode;
   (4) The gel precursor solution obtained in step (2) is injected into the battery cell obtained in step (3). Under controlled conditions of 25°C temperature and 2% relative humidity, the cell is maintained in an open state for 24 hours to ensure complete immersion of the gel electrolyte precursor solution throughout the cell interior. A nitrogen purging process is then performed for 10 minutes, with the nitrogen delivery tube having an orifice area of 0.5 cm² and a gas flow velocity of 5 cm/s. Following the nitrogen treatment, the cell is sealed and subsequently stored at 25°C for 12 hours. During this period, in-situ polymerization of the gel electrolyte precursor solution occurs within the cell, resulting in the formation of a uniform gel electrolyte. The final battery is obtained after completing the formation process, degassing, and capacity grading procedures.

### Application Example 2

A battery, which is different from Example 1 only in that the polymerization monomer in the gel precursor solution is composed of n-butyl acrylate, polyethylene glycol dimethyl methacrylate and glycidyl methacrylate in a mass ratio of 1:0.5:0.5, and other substances, amounts and parameters are the same as those in Example 1.

### Application Example 3

A battery, which is different from Example 1 only in that the polymerization monomer in the gel precursor solution composed of n-butyl acrylate, polyethylene glycol dimethyl methacrylate and glycidyl methacrylate in a mass ratio of 1:1.5:0.1, and other substances, amounts and parameters are the same as in Example 1.

### Application Example 4

A battery, which is different from Example 1 only in that the polymerization monomer in the gel precursor solution is composed of n-butyl acrylate, polyethylene glycol dimethyl methacrylate and glycidyl methacrylate in a mass ratio of 1:0.4:0.2, and other substances, amounts and parameters are the same as those in Example 1.

### Application Example 5

A battery, which is different from Example 1 only in that the polymerization monomer in the gel precursor solution composed of n-butyl acrylate, polyethylene glycol dimethyl methacrylate and glycidyl methacrylate in a mass ratio of 1:1.8:0.2, and other substances, amounts and parameters are the same as those in Example 1.

### Application Example 6

A battery, which is different from Example 1 only in that the polymerization monomer in the gel precursor solution composed of n-butyl acrylate, polyethylene glycol dimethyl methacrylate and glycidyl methacrylate in a mass ratio of 1:0.8:0.05, and other substances, amounts and parameters are the same as those in Example 1.

### Application Example 7

A battery, which is different from embodiment 1 only in that the polymerization monomer in the gel precursor solution is composed of n-butyl acrylate, polyethylene glycol dimethyl methacrylate and glycidyl methacrylate in a mass ratio of 1:0.8:0.8, and other substances, amounts and parameters are the same as those in Example 1.

### Comparative Application Example 1

A battery, which is different from Example 1 only in that butyl acrylate is not added to the gel precursor solution, and other substances, amounts and parameters are the same as in Example 1.

### Comparative Application Example 2

A battery, which is different from Example 1 only in that polyethylene glycol dimethyl methacrylate is not added to the gel precursor solution, and other substances, amounts and parameters are the same as those in Example 1.

### Comparative Application Example 3

A battery, which is different from Example 1 only in that glycidyl methacrylate is not added to the gel precursor solution, and other substances, amounts and parameters are the same as in Example 1.

### Performance testing:

(1) Color: The test standard is based on the national standard GB/T 3143-1982 for the determination of color in liquid chemical products (Hazen units are platinum-cobalt color numbers). The color of the gel electrolyte sample is compared with that of standard platinum-cobalt solutions of different concentrations using the naked eye. The chroma of the gel electrolyte is expressed in the Hazen (platinum-cobalt) color units of the standard platinum-cobalt comparison solution that is closest to the sample;
(2) Free acid (measured by HF): The test is carried out by acid-base titration. An appropriate amount of gel electrolyte is placed in methyl red-acetonitrile solution, ultrasonic dispersion is used, and 0.05 mol/L triethylamine-acetonitrile solution is used for titration. The indicator solution turns yellow as the endpoint of titration;
(3) Ionic conductivity: The test is carried out by AC impedance method. The gel electrolyte precursor solution is placed in a lithium-lithium symmetric button cell, and after assembly, the gel electrolyte is formed through polymerization reaction. The total impedance contributed by the electrolyte in the battery is measured, and the ionic conductivity value is calculated based on the size of the tested gel electrolyte;
(4) Appearance: the gel electrolyte state is observed with naked eye, including whether it is clear, transparent and fluid.
(5) Heating box Test: The test battery is first charged at a constant current of 0.5C to 4.2V, followed by constant voltage charging until the charging termination current drops to 0.05C, at which point charging is stopped to achieve a fully charged state. For the heating box test, the following procedure is implemented. At first, the temperature sensors are attached to the center of both the front and back surfaces of the pouch cell. Then, the cell is placed in a heating box and maintained at 80°C for 3 h. Subsequently, the temperature is increased at a rate of 5°C/min, with a 30-minute holding period after each 5°C increment. At last, the test continues until either thermal runaway occurs or the temperature reaches 200°C, at which point the test is terminated.
(6) Capacity test: The test battery is charged at a constant current of 0.5C to 4.2V at 25°C, followed by constant voltage charging until the charging termination current decreases to 0.05C, after which the charging process is terminated. The battery is then allowed to rest for 30 minutes. Subsequently, the battery is discharged at a constant current of 0.5C to 2.8V to determine its discharge capacity.
(7) Charge and discharge cycle performance: At 25°C, the battery to be tested is set according to the capacity test procedures for 100 charge and discharge cycles, and the capacity retention rate is obtained by calculating the ratio of discharge capacity after and before the cycle;
(8) Battery internal resistance: First, the battery is charged to 3.6V, and then the battery internal resistance is tested with a voltage internal resistance meter.

The color, free acid, ionic conductivity and appearance of the gel electrolyte provided in Examples 1 to 8 were tested according to the above test method. The test results are shown in Table 1:

**Table 1**

| | Color (Hazen) | Free acid (ppm) | Ionic conductivity (mS/cm) | Appearance |
|---|---|---|---|---|
| Example 1 | 30 | 21 | 6.6 | Colorless and transparent gel with fluidity |
| Example 2 | 40 | 29 | 5.9 | Colorless and transparent gel with fluidity |
| Example 3 | 25 | 20 | 5.8 | Colorless and transparent gel with fluidity |
| Example 4 | 80 | 75 | 5.3 | Light yellow transparent gel with fluidity |
| Example 5 | 35 | 32 | 8.8 | Colorless and transparent liquid |
| Example 6 | 30 | 25 | 2.1 | Colorless and transparent gel with a hard texture |
| Example 7 | 30 | 26 | 5.7 | Colorless and transparent gel with fluidity |
| Example 8 | 35 | 30 | 2.4 | White turbid liquid |

According to the data in Table 1, it can be seen that:
Examples 1, 2, and 3 all form gel electrolytes with ideal texture and high fluidity, with the color intensity of the gel electrolyte ≤40 Hazen and free acid content ≤30 ppm, meeting the actual requirements for electrolytes, which indicates that a temperature range of 20 to 40° C is suitable for polymerization reactions; and Example 1, which falls within the further preferred range of 25 to 30°C, exhibits relatively higher ionic conductivity.

Compared to Example 1, in Example 4, the polymerization reaction was carried out at an excessively high temperature (60°C). Due to the increased decomposition rate of electrolyte solution additives, the resulting gel electrolyte shows higher color intensity and free acid content; compared to Example 1, in Example 5, the proportion of polyfunctional acrylate monomers is too low, preventing the formation of a gel-like electrolyte; compared to Example 1, in Example 6, the amount of polyfunctional acrylate monomers is too high, resulting in a hard gel electrolyte with significantly reduced ionic conductivity; compared to Example 1, in Example 7, the amount of functional monomers is too low, leading to a good gel electrolyte state but potentially reducing battery thermal safety; compared to Example 1, in Example 8, the amount of functional monomers is too high, causing the polymer to precipitate from the electrolyte and fail to form a gel-like electrolyte.

The battery provided in application examples 1 - 7 and comparison application examples 1 - 3 was tested for thermal chamber, capacity, charge-discharge cycle performance and internal resistance according to the test method provided above. The test results are shown in Table 2:

**Table 2**

| | Thermal chamber test | capacit y (Ah) | 25°C capacity retention rate (%) after 100 charge and discharge cycles | Internal resistance (mΩ) |
|---|---|---|---|---|
| Application Example 1 | 200°C, passed | 3.17 | 98.5 | 26.3 |
| Application Example 2 | 200°C, passed | 3.12 | 97.9 | 27.3 |
| Application Example 3 | 200°C, passed | 3.05 | 97.2 | 27.4 |
| Application Example 4 | 140°C, thermal runaway | 3.16 | 98.1 | 24.2 |
| Application Example 5 | 200°C, passed | 2.99 | 96.9 | 29.2 |
| Application Example 6 | 150°C, thermal runaway | 3.14 | 98.2 | 26.5 |
| Application Example 7 | 180°C, thermal runaway | 3.03 | 97.4 | 28.5 |
| Comparative Application Example 1 | 200°C, passed | 2.95 | 96.4 | 32.1 |
| Comparative Application Example 2 | 150°C, thermal runaway | 3.07 | 97.6 | 23.7 |
| Comparative Application Example 3 | 180°C, thermal runaway | 3.15 | 98.3 | 26.4 |

According to the data in Table 2, it can be seen that Application Examples 1 - 3 have the characteristics of low internal resistance, high discharge capacity and excellent charge-discharge cycle performance due to the use of the preferred gel electrolyte formula provided by the present invention; In addition, the heating box test shows that the thermal safety performance is good;

As can be seen from the data of Application Examples 4 to 7, the gel electrolyte produced when the mass ratio of the monomer falls outside the preferred range defined in the present invention can lead to deteriorated electrochemical performance in subsequently fabricated batteries, or can result in poor thermal safety characteristics.

By comparing Comparative Application Example 1 with Application Example 1, it is evident that the absence of monofunctional acrylate monomers in the electrolyte results in an overly hard gel texture, which leads to increased internal resistance and reduced charge-discharge cycle performance. By comparing Comparative Application Example 2 with Application Example 1, it is clear that the lack of polyfunctional acrylate monomers in the electrolyte prevents the formation of a structurally stable gel electrolyte, thus resulting in poor thermal safety of the battery. By comparing Comparative Application Example 3 with Application Example 1, it is found that the absence of functional monomers in the electrolyte prevents the formation of a more structurally stable gel electrolyte at higher temperatures, leading to slightly inferior thermal safety.

The applicant states that the present invention is described through the above embodiments to illustrate a low-temperature polymerized gel electrolyte and batteries containing it. However, the present invention is not limited to these embodiments, meaning it does not have to rely on them for implementation. Those skilled in the art should understand that any improvements to the present invention, equivalent substitutions of raw materials in the product, addition of auxiliary components, and specific method choices all fall within the scope of protection and disclosure of the present invention.

## Claims

1. A low-temperature polymerized gel electrolyte, **characterized in that** the preparation raw material of the low-temperature polymerized gel electrolyte is a gel precursor solution, the gel precursor solution includes polymerization monomer, electrolyte solution additive, thermal initiator, lithium salt and solvent;
The polymerization monomers include monofunctional acrylate monomers, polyfunctional acrylate monomers and functional monomers, and the functional monomers contain cross-linking groups and monovinyl groups.

2. The low-temperature polymerized gel electrolyte according to claim 1 **characterized in that** the gel precursor solution comprises the following components in parts by weight:
| | |
|---|---|
| Polymerization monomers | 1 to 10 parts by weight |
| Electrolyte solution additives | 0 to 10 parts by weight and not equal to 0 |
| Thermal initiator | 0.02 to 0.05 parts by weight |
| Lithium salts | 8 to 20 parts by weight |
| Solvent | 50 to 80 parts by weight. |

3. The low-temperature polymerized gel electrolyte according to claim 1 **characterized in that** the mass ratio of monofunctional acrylate monomer, polyfunctional acrylate monomer and functional monomer is 1:(0.5 - 1.5):(0.1 - 0.5).

4. The low-temperature polymerized gel electrolyte according to claim 1, **characterized in that** the monofunctional acrylate monomers include any one or at least two combinations of n-butyl acrylate, isobutyl acrylate, propyl acrylate, polyethylene glycol methacrylate, polyethylene glycol monomethyl ether methacrylate, acrylate-2-methoxyethyl ester, ethyl acrylate, hexyl acrylate, laurate acrylate, acrylate-2-ethylhexyl ester, lauric acid methacrylate, or octyl acrylate;
The multi-functional acrylate monomers include any one or a combination of at least two of polyethylene glycol dimethyl acrylate, polyethylene glycol diacrylate, pentaerythritol tetraacrylate, ethoxylated trimethylolpropane triacrylate, ethylene glycol dimethyl acrylate, tetraethyleneglycol dimethyl acrylate, or triethyleneglycol diacrylate.

5. The low-temperature polymerized gel electrolyte according to claim 1, **characterized in that** the functional monomers include any one or a combination of at least two of glycidyl methacrylate, trimethoxysilane vinyl, triethoxysilane vinyl, triisopropoxysilane vinyl, or γ -methacryloxypropyltrimethoxysilane.

6. A method for preparing a low-temperature polymerized gel electrolyte as claimed in any one of claims 1 to 5, **characterized in that** the method comprises: polymerization monomers, electrolyte solution additives, thermal initiators, lithium salts, and solvents at 20 - 40°C under a nitrogen atmosphere for 6 - 24 h to obtain the gel electrolyte.

7. A battery, **characterized in that** the battery comprises a cathode, an anode, a separator and a low-temperature polymerized gel electrolyte as claimed in any one of claims 1 to 5.

8. A method for preparing a battery as claimed in claim 7, **characterized in that** the method comprises the following steps:
(1) The cathode, anode and separator are assembled to obtain the battery cell;
(2) The preparation raw material of the low-temperature polymerized gel electrolyte as claimed in any one of claims 1 to 5 is injected into the battery cell obtained in step (1), left open and sealed after nitrogen gas is passed through, and the battery is obtained by in-situ polymerization.

9. The method according to claim 8, **characterized in that** step (1) is carried out under an air environment with a temperature of 20 - 25°C and humidity of 0 - 5%.

10. The method according to claim 8, **characterized in that** the temperature of in-situ polymerization in step (2) is 20 - 40°C and the time is 6 - 24 h.
